# EUROPEAN PATENT SPECIFICATION

(11) **EP 2 411 247 B1**
(45) Date of publication and mention of the grant of the patent: **29.05.2013**
(21) Application number: 10723775.2
(22) Date of filing: 26.03.2010
(51) Int. Cl.: B60R 21/215

(54) **SEAMLESS COVER PANEL FOR AIRBAGS HAVING AN IMPROVED BREAKING FEATURE AND METHOD OF MANUFACTURING THE SAME**
NAHTLOSE ABDECKPLATTE FÜR AIRBAGS MIT EINEM VERBESSERTEN BRUCHMERKMAL UND HERSTELLUNGSVERFAHREN DAFÜR
PANNEAU DE COUVERTURE SANS COUTURE POUR COUSSINS DE SÉCURITÉ GONFLABLES COMPORTANT UN ÉLÉMENT DE RUPTURE AMÉLIORÉ, ET PROCÉDÉ DE FABRICATION DUDIT PANNEAU

(30) Priority: 26.03.2009 IT RM20090142
(43) Date of publication of application: 01.02.2012
(73) Proprietor: Adler Evo S.r.l., 80100 Napoli (IT)
(72) Inventor: UGUCCIONI, Fabrizio, I-61011 Gabicce Mare (IT); ALUIGI, Paolo, I-61100 Pesaro (IT)
(74) Representative: Cinquantini, Bruno
(86) International application number: PCT/IB2010/051335
(87) International publication number: WO 2010/109440

(56) References cited:
- EP-A- 0 770 522
- US-A- 5 901 977
- US-A- 5 992 876
- US-B1- 6 328 367

## Description

### Field of the invention

The present invention relates to a seamless cover panel for airbags having an improved breaking feature and to a method of manufacturing the same panel.

### State of the art

Executive and especially luxury automobiles employ a substantially smooth, uniform covering material which covers the instrument panel by concealing, from the passengers' sight, the opening doors obtained in the cover panel from which the airbags are released in the case of an accident which generates a crash. The aesthetical taste of the market thus tends to conceal these openings and doors by proposing smooth, uniform instrument panels or interior vehicle coverings on the side visible to passengers, despite the presence of the trace of thinner material, the thickness of which is calculated to be broken under the stress generated by the expansion produced by the pneumatic cushion over the second fractions successive to the crash of the automobile with the obstacle. In such a case, in order to conceal all traces of the stress raisers on the side visible to passengers, the surface material which covers the instrument panel is pre-cut on the concealed side in the factory, using the most various techniques, such as trimming, cutting, laser cutting. The so created groove promotes the panel breaking during the explosion of the airbag in compliance with the maximum timeframes required by the safety standards for every type of motor vehicle.

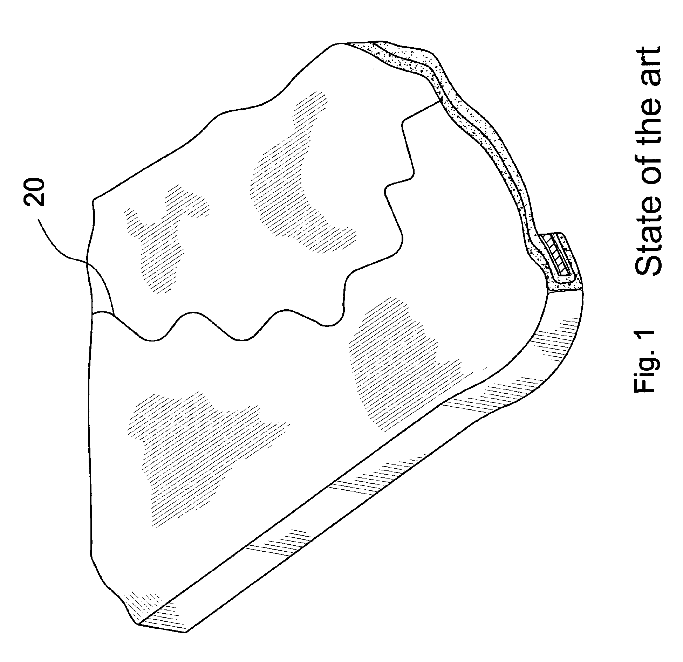

In motor vehicles the visible covering layer of which is of certain prestige, e.g. automobiles having a surface layer made of leather, imitation leather made of polyurethanes or any soft but highly stretchable materials, before the complete breaking occurs due to stretching or tearing, there is also a need to provide pre-cuts made both in part of the thickness of the rigid support material of the cover panel over the whole extension of the lines which must tear on the side of the concealed material itself, and in the surface material. For this reason, the complete opening of the opening door of the airbag, which releases the pneumatic cushion, occurs due to the stretching of the soft covering material after the tear has involved the rigid material layer and has then extended to the soft material layer. The complete tear of the soft covering material is also promoted by the aid of cuts made in the factory, which weaken the thickness of the material layers. In all cases, during the step of designing, there is a need to accurately consider the maximum stretching ability which may be offered by the soft surface layer before its completely tearing, to ensure the fulfilment of standards which provide for precise maximum opening timeframes for the airbag in the case of a crash. An example of cutting of the covering material is shown in figure 1, where the stress raiser pre-cut on the surface material is indicated by the numeral 20.

US6328367 shows a cover panel according to the preamble of claim 1 having a flap covering an opening for passage of an air bag when the air bag is triggered. The flap is also covered by the foil and is marked by a weakening and/or perforation along its edge. On its side facing a vehicle occupant compartment, the interior covering part is provided with a laminated-on decorative layer which is slotted on the side situated opposite a hypothetical folding axis as well as in areas on both adjoining upright sides of the flap. The slotted areas of the decorative layer are covered by a fitted-on strip.

### Summary of the invention

It is the object of the present invention to provide a panel for airbags having an improved breaking feature in which the aesthetic features of the visible surface of the panel zone, where the airbag is stored, are maintained.

It is the object of the present invention to provide a cover panel for vehicle airbags which, according to claim 1, comprises a rigid structure with at least one openable door for releasing said airbag in case of a vehicle crash, said rigid structure being covered by an elastic covering material, characterized in that said elastic covering material comprises, wherein said elastic covering material comprises, in a part concealed from sight when the cover panel is fitted aboard the vehicle, at least one stress raiser tear or cutting concerning the whole thickness of the elastic covering material, the cutting or tear having a direction intersecting a hinge line of said openable door about which the door rotates when the airbag opens, and wherein the concealed part of the elastic covering material is a folding of the covering material about the rigid structure.

Moreover, a rigid or semi-rigid ornament may be provided on the elastic covering material at the upper part of the panel, applied so that at least one edge thereof substantially follows said direction intersecting the hinge line.

It is another object of the present invention to provide a method of manufacturing a panel for airbags having an improved breaking feature.

Therefore, according to claim 4, a method of manufacturing a seamless cover panel for vehicle airbags having an improved breaking feature is also an object of the present invention; said panel comprising a rigid structure comprising at least one openable door for releasing an airbag and an elastic covering material which covers said rigid structure; the method comprising an operation of cutting a stress raiser tear on a part of the elastic covering material concealed from sight when said panel is installed aboard a vehicle, said cutting operation being carried out either before or during or after the application of the elastic covering material to the rigid structure, the tear having such a direction that, if continued, regardless of the laying plane, it intersects a hinge line of said openable door, and wherein said concealed part of the elastic covering material is obtained by folding the covering material about an edge of the rigid structure.

The dependent claims describe preferred embodiments of the invention, thus forming an integral part of the present description.

### Brief description of the drawings

Further features and advantages of the invention will become more apparent in light of the detailed description of a preferred but non-exclusive embodiment of a seamless panel for airbags having an improved breaking feature and of a method of manufacturing the same, disclosed by way of non-limiting example, with the aid of accompanying drawings in which:
Fig. 1 depicts a detail of a panel covering an airbag according to a typical embodiment of the state of the art;
Fig. 2 depicts a section on a plane which is substantially transversal to the surface of an instrument panel or interior cover panel of a vehicle according to the invention, in a position of normal travel of the vehicle;
Fig. 3 depicts an enlarged detail of the panel of the invention in a zone concealed from sight;
Fig. 4 depicts the panel in figure 3 after the airbag has inflated upon the explosion caused by a crash.

The same reference numbers and letters in the figures identify the same elements or components.

### Detailed description of a preferred embodiment of the invention

The soft, elastic covering material coated on the rigid covering will be called "leather" here, also comprising in such a definition those artificial materials having structural features similar to natural leather, as well as fabrics.

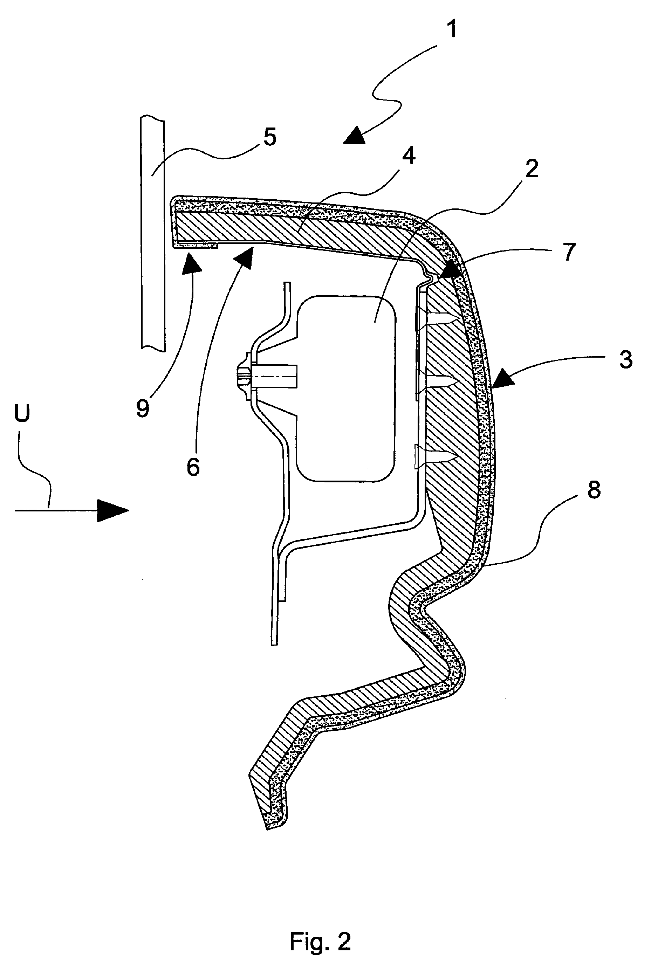

With particular reference to Fig. 2, a preferred embodiment of a panel 3 of a vehicle door 1 is shown according to the present invention; in particular, here it is a door of an automobile containing one or more curtain airbags 2 within its thickness, to shield from crashes laterally caused to the vehicle, e.g. in the direction of arrow U. The cover panel 3 of vehicle door 1 comprises a rigid support structure 4. Motor vehicles which include lateral airbags generally arrange them in the zone under the window glass 5 of the vehicle door 1. The covering of vehicle door 1 comprises a door 6 in the upper part of panel 3, adjacent with the window, which may be opened upon the bursting of the airbag and under the pressure generated by the same. Said movable door 6 is adapted to be opened by rotating about an opening or hinge line which is substantially parallel to the surface of the window glass, in order to allow the airbag 2 to be released from its housing and to inflate upwards to protect the passenger's trunk side and head. Such a hinge line is advantageously made by weakening the cover panel in such a zone or by reducing the thickness with respect to the adjacent zones of the panel 3 or by means of a similar technique.

Since the leather 8 is applied on the rigid structure 4 and turned about the end borders thereof on the side in contact with the window glass 5 of the vehicle, before or during or after the application of the leather 8 to the structure 4, one or more cuts are made in the leather 8 passing close to the edge of the leather itself, which is turned about the rigid support structure 4 and which is concealed from sight when the panel is fitted aboard the vehicle. The cut 10 passing through the whole thickness of the leather 8, which is the beginning of a real tear, is made so that the tear, which extends under the expansion action of the airbag, if continued, regardless of the laying plane, intersects or tends to intersect the hinge line 7 of the movable door 6. The beginning of the tear 10 thus made in the leather 8 remains concealed from sight because it is only made over a predetermined length lower than the length of the rim 9 (Fig. 2) which is made by turning the leather 8 about the rigid support structure 4 of the leather itself. Said stress raiser cut or tear 10 is placed along a direction which is substantially transversal to the opening or hinge line of door 6.

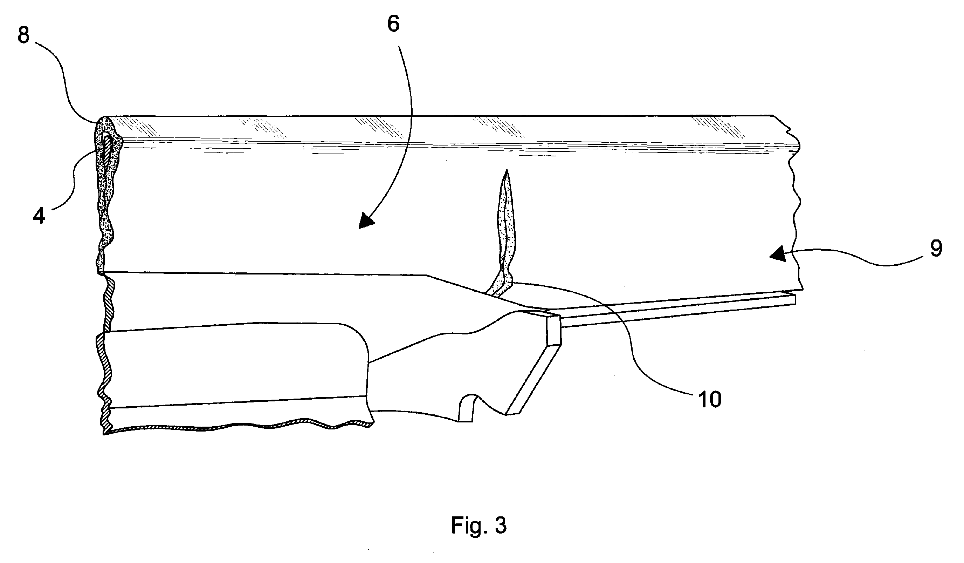

Fig. 3 only shows a cut or tear 10 in the leather 8 for reasons of simplicity, but the cuts in the leather 8 may generally be two or more than two at the tear or breaking lines of the panel, depending on how such a panel is made. The tear or breaking lines of the panel are transversal to the hinge line of the panel itself.

Contrarily to the current suggestions of the known art, it has been observed by means of the performed tests that there is no need to make pre-cuts or partial cuts or other interventions to superficially weaken a portion of the thickness of leather 8, which run along the opening lines of the openable door 6; but instead, making the described tears passing only over a section close to the end edge forming the rim 9 is enough, which tears, if continued during the tearing action, intersect or tend to intersect the opening lines of the movable door; and when the airbag bursts, the leather acts as a sheet of paper which tears starting from an edge thereof.

An advantageous variant may include the application of a rigid or semi-rigid ornament (not shown) on the leather 8, at the upper part 11 of panel 3, e.g. a plate or strip bearing the manufacturer's name or the name of the vehicle model. Said rigid or semi-rigid ornament is applied so that at least one edge thereof substantially follows the direction which is substantially transversal to the opening or hinge line 7 of door 6, said direction being defined by the stress raiser cut or tear 10 provided in the rim 9 of the leather 8. In practice, the edge of said rigid or semi-rigid ornament substantially is on the same laying plane as said cut 10. Therefore, opening the openable door is even more facilitated.

The cuts or tears 10 in the rim 9 of the leather 8 are substantially parallel to the tear or breaking lines of the panel, transversal to the hinge line 7. A weakening of the cover panel is provided at said transversal tear or breaking lines of the panel, e.g. by reducing the thickness with respect to the adjacent zones, by means of milling or by means of other suitable techniques, for example.

The advantages resulting from the application of the present invention as compared to the panels of the state of the art are apparent. It is worth noting that the beginning of the tear 10 or stress raiser made in the leather 8 over a predetermined short length, carried out on the edge of the covering made of leather, artificial leather or similar material, ensures the same effectiveness as a partial cut in the thickness of the covering material which runs along the whole opening line of the openable door, having an improved aesthetical effect.

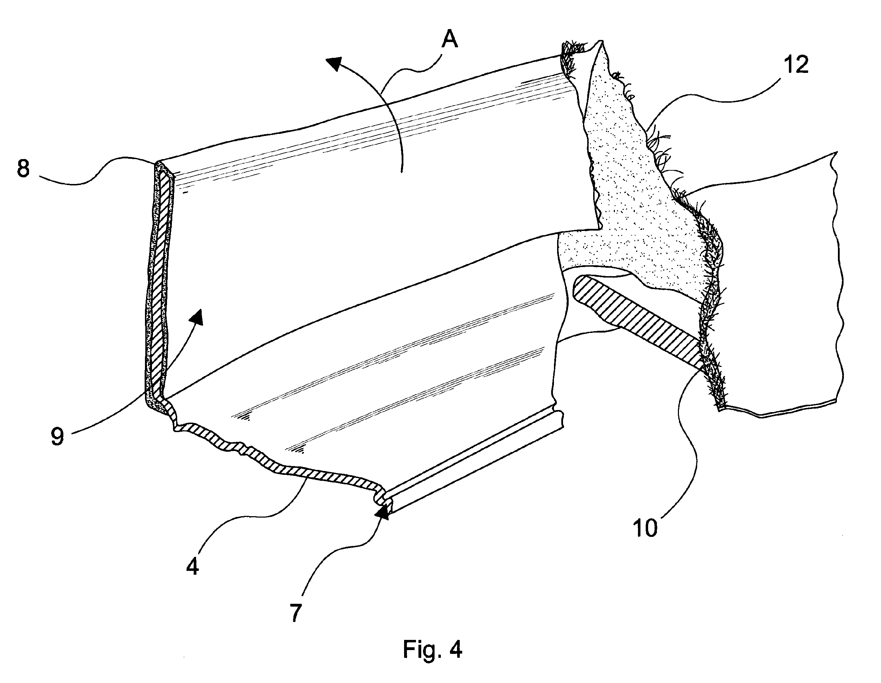

Surprisingly, the dynamics of the tear is carried out with the sufficient rapidity required by the standards for completing the opening of door 6 which covers the pneumatic cushion 2 as the airbag is unfolded to achieve its complete effectiveness. Fig. 4 shows the final opening position of the openable door once it has been rotated in the direction of arrow A and has released the airbag, thus revealing the tear 12 which was produced in the leather by continuing the beginning of tear 10.

The specific embodiment described herein do not restrict the contents of this application which covers all the variants of the invention defined in the claims.

## Claims

1. A cover panel for vehicle airbags comprising a rigid structure (4) with at least one openable door (6) for releasing said airbag in case of a vehicle crash, said rigid structure (4) being covered by an elastic covering material (8),
wherein said elastic covering material (8) comprises, in a part concealed from sight when the cover panel is fitted on the vehicle, at least one stress raiser tear or cut (10) concerning the whole thickness of the elastic covering material, the cut or tear (10) having a direction intersecting a hinge line (7) of said openable door (6) about which the door rotates when the airbag opens, **characterized in that**
the concealed part of the elastic covering material (8) is a folding of the covering material about the rigid structure (4).

2. A panel according to claim 1, wherein a rigid or semi-rigid ornament may be provided on the elastic covering material at the upper part (11) of the panel, the ornament being applied so that at least one edge thereof substantially follows said direction intersecting a hinge line.

3. A panel according to any one of the preceding claims, wherein the elastic covering material is leather or artificial leather.

4. A method of manufacturing a seamless panel for airbags having an improved breaking feature; said panel comprising a rigid structure (4) comprising at least one openable door (6) for releasing an airbag and an elastic covering material (8) which covers said rigid structure (4); the method comprising an operation of cutting a stress raiser tear (10) in a part of the elastic covering material (8) concealed from sight when said panel is installed on a vehicle, said cutting operation being carried out either before or during or after the application of the elastic covering material (8) to the rigid structure (4), the tear (10) having such a direction that, if continued, regardless of the laying plane, it intersects a hinge line of said openable door (6), **characterized in that**
said concealed part of the elastic covering material (8) is obtained by folding the covering material about an edge of the rigid structure (4).

5. A method of manufacturing according to claim 4, wherein a rigid or semi-rigid ornament may be applied to the elastic covering material (8) at the upper part (11) of the panel, so that at least one edge thereof substantially follows said direction intersecting the hinge line.

## Patentansprüche

1. Abdeckplatte für Fahrzeugairbags, die eine starre Struktur (4) mit zumindest einer öffenbaren Tür (6) zum Freigeben des Airbags im Fall eines Unfalls des Fahrzeugs umfasst, wobei die starre Struktur (4) durch ein elastisches Abdeckmaterial (8) abgedeckt ist,
wobei das elastische Abdeckmaterial (8) in einem Teil, der sichtverdeckt ist, wenn die Abdeckplatte an dem Fahrzeug befestigt ist, zumindest einen Spannungserhöherriss oder -schnitt (10) umfasst, der die gesamte Dicke des elastischen Abdeckmaterials betrifft, wobei der Schnitt oder Riss (10) eine Richtung aufweist, die eine Scharnierlinie (7) der öffenbaren Tür (6), um die die Tür beim Öffnen des Airbags rotiert, schneidet,
**dadurch gekennzeichnet, dass**
der verdeckte Teil des elastischen Abdeckmaterials (8) ein Umschlag des Abdeckmaterials um die starre Struktur (4) herum ist.

2. Platte nach Anspruch 1,
wobei ein starres oder halbstarres Ornament an dem elastischen Abdeckmaterial an dem oberen Teil (11) der Platte vorgesehen sein kann, wobei das Ornament derart angebracht ist, dass zumindest eine Kante davon im Wesentlichen der Richtung, die eine Scharnierlinie schneidet, folgt.

3. Platte nach einem der vorhergehenden Ansprüche,
wobei das elastische Abdeckmaterial Leder oder Kunstleder ist.

4. Verfahren zum Herstellen einer nahtlosen Platte für Airbags, die ein verbessertes Bruchmerkmal aufweist; wobei die Platte eine starre Struktur (4) umfasst, die zumindest eine öffenbare Tür (6) zum Freigeben eines Airbags und ein elastisches Abdeckmaterial (8) umfasst, das die starre Struktur (4) abdeckt; wobei das Verfahren einen Schneidevorgang eines Spannungserhöherrisses (10) in einem Teil des elastischen Abdeckmaterials (8), der sichtverdeckt ist, wenn die Platte in einem Fahrzeug eingebaut ist, umfasst, wobei der Schneidevorgang entweder vor oder während oder nach der Anbringung des elastischen Abdeckmaterials (8) an der starren Struktur (4) ausgeführt wird, wobei der Riss (10) eine solche Richtung aufweist, dass er, wenn er fortgesetzt wird, ungeachtet der Lageebene, eine Scharnierlinie der öffenbaren Tür (6) schneidet,
**dadurch gekennzeichnet, dass**
der verdeckte Teil des elastischen Abdeckmaterials (8) erhalten wird, indem das Abdeckmaterial um eine Kante der starren Struktur (4) herum umgeschlagen wird.

5. Herstellungsverfahren nach Anspruch 4,
wobei ein starres oder halbstarres Ornament an dem elastischen Abdeckmaterial (8) an dem oberen Teil (11) der Platte angebracht werden kann, so dass zumindest eine Kante davon im Wesentlichen der Richtung, die die Scharnierlinie schneidet, folgt.

## Revendications

1. Panneau de couverture pour coussins de sécurité gonflables de véhicule comprenant une structure rigide (4) avec au moins une porte ouvrable (6) pour libérer ledit coussin de sécurité gonflable en cas de collision du véhicule, ladite structure rigide (4) étant couverte par un matériau de couverture élastique (8),
dans lequel ledit matériau de couverture élastique (8) comprend dans une partie cachée de la vue lorsque le panneau de couverture est monté sur le véhicule, au moins une zone de rupture de concentration de contraintes ou découpe (10) concernant l'épaisseur entière du matériau de couverture élastique, la découpe ou la zone de rupture (10) présentant une direction coupant une ligne d'articulation (7) de ladite porte ouvrable (6), autour de laquelle la porte tourne lorsque le coussin de sécurité gonflable s'ouvre, **caractérisé en ce que**
la partie cachée du matériau de couverture élastique (8) est un pliage du matériau de couverture autour de la structure rigide (4).

2. Panneau selon la revendication 1, dans lequel un ornement rigide ou semi-rigide peut être prévu sur le matériau de couverture élastique sur la partie supérieure (11) du panneau, l'ornement étant appliqué de sorte qu'au moins une de ses arêtes suive sensiblement ladite direction coupant une ligne d'articulation.

3. Panneau selon l'une quelconque des revendications précédentes, dans lequel le matériau de couverture élastique est du cuir ou du cuir synthétique.

4. Procédé de fabrication d'un panneau sans couture pour coussins de sécurité gonflables comportant un élément de rupture amélioré; ledit panneau comprenant une structure rigide (4) comprenant au moins une porte ouvrable (6) pour libérer un coussin de sécurité gonflable et un matériau de couverture élastique (8) qui couvre ladite structure rigide (4) ; le procédé comprenant une opération de découpe d'une zone de rupture de concentration de contraintes (10) dans une partie du matériau de couverture élastique (8) cachée de la vue lorsque ledit panneau est installé sur un véhicule, ladite opération de découpe étant réalisée avant ou pendant ou après l'application du matériau de couverture élastique (8) sur la structure rigide (4), la zone de rupture (10) présentant une direction telle que si elle continue, indépendamment du plan de pose, elle croise une ligne d'articulation de ladite porte ouvrable (6), **caractérisé en ce que** ladite partie cachée du matériau de couverture élastique (8) est obtenue par pliage du matériau de couverture autour d'une arête de la structure rigide (4).

5. Procédé de fabrication selon la revendication 4, dans lequel un ornement rigide ou semi-rigide peut être appliqué au matériau de couverture élastique (8) sur la partie supérieure (11) du panneau de sorte qu'au moins une arête de ses arêtes suive sensiblement ladite direction croisant la ligne d'articulation.
